# EUROPÄISCHE PATENTANMELDUNG

(11) **EP 0 908 259 A2**
(43) Veröffentlichungstag der Anmeldung: **14.04.1999**
(21) Anmeldenummer: 98115382.8
(22) Anmeldetag: 17.08.1998
(51) Int. Cl.: B23B 27/14

(54) **Schneidplatte, Verfahren zur Herstellung einer solchen Schneidplatte, Werkzeug und Verfahren zum Zerspanen eines Werkstückes unter Verwendung einer solchen Schneidplatte**

(30) Priorität: 27.09.1997 DE 19742765
(71) Anmelder: Gebr. Heller Maschinenfabrik GmbH, D-72622 Nürtingen (DE)
(72) Erfinder: Bertschinger, Wolfgang, D-73728 Esslingen (DE)
(74) Vertreter: Jackisch-Kohl, Anna-Katharina

(57) **Zusammenfassung**

Die Schneidplatte (1) ist vorzugsweise eine Wendeplatte, die für ein spanabhebendes Werkzeug vorgesehen ist. Sie weist einen Schneidkeil (2) auf, der durch eine Spanfläche (3) und eine Freifläche (4) gebildet ist. Um die Schneidplatte (1) so auszubilden, daß in einfacher Weise und bei langen Standzeiten des Werkzeuges bzw. seiner Schneidplatte (1) eine hohe Bearbeitungsgenauigkeit am Werkstück erzielt wird, ist am Schneidkeil (2) ein Freiwinkel zwischen 0° und etwa 3° vorgesehen. Durch diesen geringen Freiflächenwinkel, der sogar 0° sein kann, wird in einfacher Weise ein zufriedenstellendes Bearbeitungsergebnis erreicht.

## Beschreibung

Die Erfindung betrifft eine Schneidplatte, insbesondere eine Wendeplatte, nach dem Oberbegriff des Anspruches 1, ein Verfahren zur Herstellung einer solchen Schneidplatte nach dem Oberbegriff des Anspruches 18, ein mit einer solchen Schneidplatte ausgestattetes Werkzeug nach dem Oberbegriff des Anspruches 29 sowie ein Verfahren zum Zerspanen eines Werkstückes unter Verwendung einer solchen Schneidplatte oder eines solchen Werkzeuges nach dem Oberbegriff des Anspruches 31.

Die Bewegungen beim Zerspanvorgang sind Relativbewegungen zwischen einer Werkzeugschneide und dem Werkstück. Die Bewegungen werden durch eine Werkzeugmaschine erzeugt und können gerade, kreisförmig oder beliebig sein. Die Späne entstehen, wenn der aus Freifläche und Spanfläche gebildete Schneidkeil nach einer Zustellbewegung durch die Wirkbewegung in das Werkstück eindringt.

Es sind Schneidkeile aus metallischen und nichtmetallischen Werkstoffen bekannt, zum Beispiel Schneidstahl, Hartmetall, Keramik, Mischkeramik, Korund, Siliciumcarbid, Borcarbid, Diamant und dergleichen.

Insbesondere Hartmetallschneidplatten können mit einer sehr dünnen Oberflächenschicht aus extrem feinkörnigen Carbiden oder Keramiken versehen werden und dadurch einen deutlichen Anstieg der Verschleißfestigkeit erfahren. Die wichtigsten Beschichtungsstoffe, die meist durch Aufdampfen im Vakuum aufgebracht werden, sind TiCN, TiN, Al₂O₃, und TiC. Zum Aufdampfen der Beschichtungsstoffe sind das PVD-, das CVD- und das Arc-PVD-Verfahren bekannt. Mit dem PVD-Verfahren können maximale Schichtdicken von etwa 2 bis 5 µm, mit dem CVD-Verfahren maximale Schichtdicken von etwa 12 bis 15 µm und beim Arc-PVD-Verfahren maximale Schichtdicken bis etwa 50 µm erreicht werden. Beim Eingriff des Werkzeuges in das Werkstück befindet sich der Schneidstoff oder seine Beschichtung in Flächenkontakt mit dem Werkstück entlang der Spanfläche. Die Schneidkante erfährt durch die spanabhebende Bewegung eine verschleißende Belastung, die zur einer Abflachung führt, dem sogenannten Span- und Freiflächenverschleiß. Die Beanspruchung der Flächen am Schneidkeil durch Druck- und Scherkräfte unter Temperatureinfluß ist jedoch unterschiedlich. Man unterscheidet dementsprechend unterschiedliche Versagensarten der verschiedenen Flächenelemente, zum Beispiel Freiflächenverschleiß, Kolkverschleiß, plastische Verformung, Kerbverschleiß, Kammrißbildung, Ermüdungsbruch, Ausbröckelung, Werkzeugbruch, Aufbauschneidenbildung. Diese Verschleißarten können parallel auftreten und beeinträchtigen den Zerspanprozeß und das Oberflächenergebnis am Werkstück. In der Praxis wird aus Wirtschaftlichkeitsgründen ein abrasiver Verschleiß zugelassen. Das Standzeitende der Schneidkante wird festgelegt als Parameter von Passivkraft, entstehender Wärme und Oberflächenqualität. Der Verschleiß durch Ausbruch von Schneidelementen wird generell als Standzeitende definiert.

Die Schneidkeile werden aus Kostengründen nur als kleine Wendeschneidplatten ausgeführt, um den Werkzeuggrundkörper über viele Standzeiten nutzen zu können und um einen möglichst geringen Einsatz von teuren Schneidwerkstoffen zu erreichen. Gleichzeitig werden bei den heutigen Bearbeitungsprozessen die Anforderungen an die Genauigkeit der Schneidkanten immer größer (± 0,01 mm). Beim Sinterprozeß ist, bedingt durch die Schrumpfung, eine Wiederholgenauigkeit über mehrere Chargen nur mit zusätzlichen nachträglichen Schleifbearbeitungen erreichbar. Es müssen auch hohe Anforderungen an die Qualität der Aufnahmen für die Schneidplatten gestellt werden, die über viele Schneidplattenstandzeiten ein genaues Positionieren und Halten der wechselbaren Schneidplatten ermöglichen müssen. Das Einwechseln und Befestigen der Platten muß durch qualifiziertes Personal durchgeführt werden, da die Sauberkeit der Sitze und die Wiederholbarkeit der Befestigungsbewegung die Lagegenauigkeit der Schneidplatte beeinflußt.

An der Schneidkante ist bei den herkömmlichen Schneidplatten ein Freiwinkel notwendig. Durch einen konstanten Vorschub wird die im Werkstück von der Schneidkante erzeugte Kontur laufend in den Bearbeitungskreis des Werkzeuges bewegt. Ein solcher Mechanismus macht Freiflächen für Gleich- und Gegenlauffräsen notwendig. Je geringer der Anteil der Schneidplattenbewegung am Schnittgeschwindigkeitsvektor ist, um so geringer ist dieser kinematische Bedarf an einem Freiflächenwinkel. Durch Erwärmung des Werkstückstoffes in der Zone hinter der Schneidkante kommt es durch Wärmeausdehnung zu einem Ausbauchen der bearbeiteten Werkstückoberfläche. Durch das Rückfedern von elastischen Verformungen des Werkstückstoffs durch die Passivkraft an der Schneidkante ist es vorteilhaft, einen Freiflächenwinkel zu haben. Die Größe des Freiwinkels wird durch das Verhältnis von Schnittgeschwindigkeit zu Vorschubgeschwindigkeit und der kinematischen Bewegung (Außen- oder Innenbearbeitung, rotierendes Werkzeug oder rotierendes Werkstück) beeinflußt. Bei gleichen Schnittparametern nimmt der benötigte Freiwinkel mit enger werdender Teilung der Schneidplatten zu. Dies ist vorteilhaft, um geringere Werkzeugwechselzeiten zu erreichen. Außerdem wird die Größe des Freiwinkels durch den Schneidenradius bestimmt. Für die Bearbeitung muß ein vernünftiges Verhältnis zwischen Schneidenradius und Spandicke gefunden werden. Da der mögliche effektive Vorschub in der Zeiteinheit beim Fräsen, Bohren und Räumen die Summe aus Vorschub/Zahn und Zähnezahl/Werkzeug ist, werden aus wirtschaftlichen Gründen enge Teilungen angestrebt.

Der Erfindung liegt die Aufgabe zugrunde, die gattungsgemäße Schneidplatte, das gattungsgemäße Verfahren, das gattungsgemäße Werkzeug sowie das gattungsgemäße Zerspanverfahren so auszubilden, daß in einfacher Weise und bei langen Standzeiten des Werkzeuges bzw. seiner Schneidplatte eine hohe Bearbeitungsgenauigkeit am Werkstück erzielt wird.

Diese Aufgabe wird bei der gattungsgemäßen Schneidplatte erfindungsgemäß mit den kennzeichnenden Merkmalen des Anspruches 1, beim gattungsgemäßen Verfahren erfindungsgemäß mit den kennzeichnenden Merkmalen des Anspruches 18, beim gattungsgemäßen Werkzeug erfindungsgemäß mit den kennzeichnenden Merkmalen des Anspruches 29 und beim gattungsgemäßen Zerspanverfahren erfindungsgemäß mit den kennzeichnenden Merkmalen des Anspruches 31 gelöst.

Bei der erfindungsgemäßen Schneidplatte liegt der Freiwinkel am Schneidkeil im Bereich zwischen 0° und etwa 3°. Durch diesen geringen Freiflächenwinkel, der sogar 0° sein kann, wird in einfacher Weise ein zufriedenstellendes Bearbeitungsergebnis erreicht. Beträgt der Freiflächenwinkel 0°, wird eine Schneidenfläche gebildet, die an die Schneidkante anschließt. Bei ausreichender Stabilisierung der Schneidkante wird der in die Werkstückoberfläche eindrückende Teil der Schneidplatte auf ein Minimum verringert.

Mit dem erfindungsgemäßen Verfahren kann die Schneidplatte in kostengünstiger Weise einfach hergestellt werden. Auf die Schneidplatte wird die Spanfläche bzw. die Freifläche in Form einer Beschichtung aufgebracht, was in einfacher Weise möglich ist. Die in den jeweiligen Beschichtungen enthaltenen Schneidstoffe können entsprechend den bei der Bearbeitung mit der Schneidplatte auftretenden Belastungen ausgewählt werden.

Beim erfindungsgemäßen rotierenden Werkzeug liegen die Schneidkanten der Schneidplatten am Umfang des Werkzeuges auf einem gedachten Zylindermantel oder einer beliebigen rotationssymmetrischen Kontur.

Beim Arbeiten mit dem erfindungsgemäßen Werkzeug bzw. der erfindungsgemäßen Schneidplatte wird mit der Freifläche unmittelbar im Anschluß an das Ablösen des Spanes vom Werkstück die freigelegte Bruchfläche am Werkstück geglättet. Auf diese Weise kann in einem einzigen Arbeitsgang geschruppt und geschlichtet werden. Durch den Glättungseffekt werden die beim Ablösen des Spanes auftretenden Rauhigkeitsspitzen in der Bruchfläche des Werkstückes beseitigt, so daß eine anschließende Nachbearbeitung des Werkstückes nicht erforderlich ist.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: einen Schneidkeil eines erfindungsgemäßen Werkzeuges, mit dem ein Span an einem Werkstück abgetragen wird,
- Fig. 2: in vergrößerter Darstellung den Schneidkeilbereich des erfindungsgemaßen Werkzeuges,
- Fig. 3: in einer Darstellung entsprechend Fig. 2 eine zweite Ausführungsform eines erfindungsgemäßen Werkzeuges.

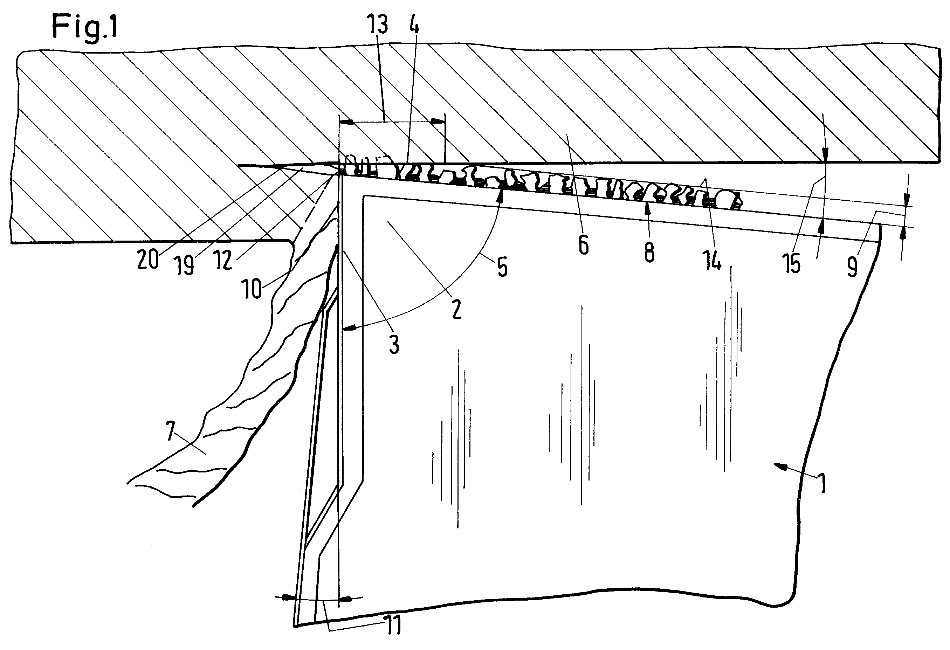

Das nicht im einzelnen dargestellte Werkzeug hat wenigstens eine Wendeplatte 1, die in bekannter Weise auf einem Werkzeugträger befestigt ist. Die Wendeplatte 1 hat einen Schneidkeil 2, der mit einer Spanfläche 3 und einer Freifläche 4 versehen ist. Der Keilwinkel 5 (Fig. 1) liegt im Bereich zwischen etwa 70° und 95° und beträgt vorzugsweise 90°. Der Freiwinkel am Schneidkeil 2 liegt im Bereich zwischen 0° und etwa 3°, vorzugsweise bei 0°.

Mit der Wendeplatte 1 wird ein Werkstück 6 spanend bearbeitet. Hierbei wird vom Werkstück 6 ein Span 7 abgehoben.

Da die Spanfläche 3 und die Freifläche 4 während der spanenden Bearbeitung des Werkstückes 6 unterschiedlich beansprucht werden, sind diesen beiden Flächen unterschiedliche Werkstoffe zugeordnet. Die Freifläche 4 wird durch mindestens eine Beschichtung 8 der Wendeplatte 1 gebildet. Die Beschichtung 8 hat eine Dicke 9 von mehr als wenigstens etwa 0,02 mm. Anstelle dieser einen Schicht können auch mehrere dünne Schichten vorgesehen sein, welche die Schicht 8 bilden.

Die Spanfläche 3 hat eine Beschichtung 10 bzw. weist einen größeren Massenanteil auf als die Beschichtung 8 der Freifläche 4. Die Beschichtung 10 besteht aus stoßunempfindlichen Werkstoff mit einer verschleißmindernden Oberfläche, mit geringer Rauheit, isolierenden Eigenschaften und einem niedrigen Reibwert. Dadurch wird gewährleistet, daß die Spanfläche 3 nur einem geringem Verschleiß unterliegt.

Da die Freifläche 4 im Einsatz des Werkzeuges einen stärkeren Einfluß auf die Werkstückqualität hat als die Spanfläche 3, besteht die Freifläche 4 aus einem Schneidstoff oder einer Schneidstoffkomposition, die eine höhere Abriebfestigkeit und eine größere Härte als der Schneidstoff bzw. die Schneidstoffkombination der Beschichtung 10 der Spanfläche 3 hat. Somit können diese beiden Flächen 3 und 4 optimal an die Beanspruchung während der spanenden Bearbeitung des Werkstückes 6 angepaßt werden. Die Werkstoffpaarungen am Schneidkeil 2 werden verbessert, da den jeweiligen unterschiedlichen Beanspruchungen an der Spanfläche 3 und an der Freifläche 4 jeweils speziell zugeschnittene Schneidstoffe oder Schneidstoffmischungen zugeordnet sind. Insbesondere der Freiflächenverschleiß, der die Oberflächenqualität und die Maßhaltigkeit des Werkstückes 6 bestimmt, kann verringert werden, wodurch die Qualität und/oder Quantität der mit der Schneidplatte 1 herstellbaren Werkstücke 6 erhöht werden können. Durch eine höhere Temperaturbeständigkeit der Schneide kann die Wirkgeschwindigkeit zwischen dem Werkzeug und dem Werkstück 6 gesteigert werden, wodurch ein Produktivitätsgewinn erzielt wird.

Der Spanwinkel 11 (Fig. 1) der Wendeplatte 1 liegt im Bereich von etwa -10° bis etwa +15°. Die Freifläche 4 hat einen an die Schneidkante 12 anschließenden Bereich 13, der mit der Spanfläche 3 den Freiwinkel zwischen etwa 0° und 3° einschließt. Der Bereich 13 geht dann in einen Freiflächenbereich 14 über, der einen größeren Freiwinkel 15 hat, der im Bereich zwischen etwa 5° und 10° liegt.

Auf der Freifläche 4 wird eine sehr dicke verschleißfeste Schicht 8 aufgebracht, die durch einfaches Umfangsabrichten, ähnlich dem Abrichten einer Schleifscheibe, bearbeitet wird, wodurch ein hochgenaues Werkzeug erzeugt wird. Nach dem Aufbringen der Beschichtung 8 wird vor dem ersten Einsatz der Wendeplatte 1 bzw. des Werkzeuges an der Freifläche 4 bewußt ein Schneidplattenverschleiß vorweggenommen. Die Beschichtung 8 hat einen Binder 16, in den verschleißfeste Elemente 17 eingebettet sind. Sie bestehen aus einzelnen CBN-Monokristallen oder ähnlichen Hartstoffpartikeln, wie Al₂O₃ (Korund), Siliziumnitrid, Saphir, natürliche oder künstliche Diamantkristalle und dergleichen. Die monokristallinen Schneidelemente 17 haben einen Durchmesser bzw. eine Querschnittsbreite, die in der Größenordnung von etwa 0,05 mm liegt. Der Binder 16 ermöglicht über die Standzeit der Wendeplatte 1 eine ausreichende Befestigung der CBN-Monokristalle 17. Treten während der Bearbeitung des Werkstückes 6 Belastungsstöße auf, können die Schneidelemente 17 bzw. ihre Schneidkanten elastisch ausweichen. Die CBN-Elemente 17 sind nur an denjenigen Wirkflächen des Schneidkeiles 2 vorgesehen, die geringe Belastungsstöße erfahren. Dabei müssen die CBN-Elemente 17 eine große Verschleißfestigkeit und hohe Warmhärte zeigen. Am Übergang zwischen der stoßbelasteten Spanfläche 3 und der Freifläche 4 befindet sich eine Vielzahl solcher CBN-Elemente 17, so daß nach einem Verschleiß des einen Elementes 17 sofort das nachfolgende Element zur weiteren Bearbeitung bereitsteht.

Die aus den CBN-Monoelementen 17 und dem Binder 16 gebildete Matrix weist eine ausreichend hohe Schichtdicke auf, die vorteilhaft größer als 50 µm ist und die einen Abrichtvorgang ermöglicht. Mit ihm kann die Sintergenauigkeit, die Bestückungsgenauigkeit und die Plattensitzgenauigkeit im Verhältnis ihrer entsprechenden Kostenanteile reduziert werden. Als Binder 16 kommt beispielsweise Nickel in Betracht.

Jedes CBN-Element 17 weist eine Schneidkante auf. Die stochastische Ausfallwahrscheinlichkeit einer Schneidkante aufgrund einer von mehreren CBN-Elementen 17 gebildeten, an die Schneidkante 12 anschließenden Fläche wird erhöht, so daß längere Standzeiten mit dem Werkzeug gefahren werden können. Wird die Wendeplatte 1 an der Freifläche 4 in der beschriebenen Weise durch Umfangsabrichten bearbeitet, werden die durch die bearbeitungsspezifischen Mechanismen entstehenden Abdrängkräfte bei diesem vorweggenommenen Schneidplattenverschleiß an der Freifläche 4 durch diese spezielle Oberflächengestaltung aufgenommen. Die Schneidkante 12 wird durch die Schichtmatrix ausreichend gestützt, wobei die verschleißfesten CBN-Elemente 17 der Freiflächenbeschichtung 8 einen sehr geringen Traganteil bilden.

Mit dem Werkzeug bzw. seinen Wendeplatten 1 wird bereits beim Abheben der Schruppspäne 7 eine sehr gute Werkstückoberfläche erreicht. Dadurch läßt sich eine erhebliche Prozeßkettenverkürzung erreichen. Durch die in die Beschichtung 8 der Freifläche 4 eingearbeiteten verschleißfesten Elemente 17 wird mit der Wendeplatte 1 der Schruppspan 7 mit einer geometrisch bestimmten Schneide und gleichzeitig eine Spanabhebung ähnlich dem Schleifen mit geome trisch unbestimmten Schneiden durchgeführt. Die geometrisch unbe stimmten Schneiden werden von den Kanten der monokristallinen verschleißfesten Elemente 17 gebildet. Der wesentliche Werkstückstoffabtrag kann nur von der geometrisch bestimmten Schneide bzw. ihrer Schneidkante 12 durchgeführt werden.

Die verschleißfesten Elemente 17 bestehen vorzugsweise aus CBN, das ein hochverschleißfester warmharter Schneidstoff ist. Für diese Elemente kommen aber auch Keramikwerkstoffe, Diamant und dergleichen in Betracht. Die in den Binder 16 eingebetteten verschleißfesten Elemente 17 bewirken einen schleifenden Oberflächenkontakt zwischen der Schneidfläche 4 und der Werkstückoberfläche 18. Dadurch werden Rauheitsspitzen geglättet. Auf diese Weise kann das Werkstück 6 in einem einzigen Vorgang geschruppt und geschlichtet werden. Es sind nicht mehr zwei Vorgänge für die Grob- und die Feinbearbeitung notwendig.

Der Freiflächenbedarf der Wendeplatte 1 wird so klein wie möglich gehalten. Es wird sogar eine Schneidenfläche in Form des Flächensegmentes 13 eines rotationssymmetrischen Körpers zugelassen, das an die Schneidkante 12 anschließt. Die Freifläche 4 wird mit einem sehr geringen Traganteil gestaltet. Dies wird dadurch erreicht, daß bei einer ausreichenden Stabilisierung der Schneidkante 12 der in die Werkstückoberfläche 18 drückende Teil der Wendeplatte 1 auf ein Minimum reduziert wird. Erreicht wird dies durch die einzelnen monokristallinen Elemente 17, die in den Binder 16 eingebettet sind. Die einzelnen Körner 17 bilden mit ihren in der Oberfläche liegenden Kanten die geometrisch unbestimmten Schneiden, mit denen in begrenztem Maße eine Zerspanung möglich ist. Mit diesen Kanten wird die Werkstückoberfläche 18 unmittelbar im Anschluß an den Abtrag des Spanes 17 geglättet.

Trotz dieser einzelnen verschleißfesten Elemente 17 wird eine scharfkantige Schneidkante 12 durch den beschriebenen Abrichtvorgang nach der vollständigen Bestückung des Werkzeuges mit den Wendeplatten 1 erreicht. Der entstehenden Gefahr von Schneidkantenausbrüchen wird durch die Redundanz der die Schneidkante 12 bildenden verschleißfesten Elemente 17 begegnet. Innerhalb des Bereiches 13 (Fig. 1) der Freifläche 4 bilden die hintereinander liegenden verschleißfesten Elemente 17 eine Schneidfläche. Da diese verschleißfesten Elemente 17 auf dem gleichen Werkzeugradius liegen, kann ein nachfolgendes Element 17 ein an der Schneidkante 12 ausgefallenes Element 17 ersetzen. Da die verschleißfesten Elemente 17 im Binder 16 aufgenommen sind, haben die verschleißfesten Elemente 17 eine Stöße und Vibrationen abfedernde und dämpfende Wirkung, wodurch die Neigung zum Ausbrechen verringert wird.

Die Dicke 9 der Beschichtung 8 der Freifläche 4 kann größer als 0,02 mm sein. Diese große Schichtdicke ermöglicht eine größere Elastizität der die Schneidkante 12 bildenden verschleißfesten Elemente 17. Durch Beschichtung mit unterschiedlichen Körnungen oder Abscheidezeiten kann ein genaues Absolutmaß der Schneidkante 12 erreicht werden, die durch die Vielzahl der einzelnen verschleißfesten Elemente 17 gebildet wird. Durch den geringen Traganteil der Freifläche 4, 13 werden Schwingungen zwischen dem Werkstück 6 und dem Werkzeug gedämpft.

Das mit den Wendeplatten 1 bestückte Werkzeug ermöglicht ein Zerspanverfahren, bei dem die Schnittgeschwindigkeit im Bereich zwischen den Dreh-, Fräs- und den Schleifgeschwindigkeiten liegt, also im Bereich zwischen etwa 100 m/min und 2000 m/min. Je nach Bearbeitungsaufgabe bei der Grob- oder Feinzerspanung werden die Schnittgeschwindigkeit und der Vorschub durch die Relativbewegung zwischen dem Werkstück 6 und dem Werkzeug aufeinander abgestimmt.

Zwischen der Schneidkante 12 und der Freifläche 4 kann eine kurze ebene oder gekrümmte Schneidfläche vorhanden sein. In Fig. 1 ist die kurze ebene Schneidfläche 13 dargestellt. Aufgrund der beschriebenen Verschleißvorwegnahme durch Abrichten der Freifläche 4 wird eine höhere Bearbeitungsgenauigkeit der Wendeplatte 1 erreicht. Die Freifläche 4 besteht aus einer Vielzahl von geometrisch unbestimmten Schneiden, die durch die Kanten der verschleißfesten Elemente 17 gebildet werden. Es ist aber auch möglich, daß die Freifläche 4 aus einer Vielzahl von geometrisch bestimmten Schneiden besteht.

Der Schneidkeil 2 bzw. die Wendeplatte 1 kann als Wafer durch Sintern aus unterschiedlichen Schneidstoffen oder Schneidstoffmischungen hergestellt werden.

Das Werkzeug bzw. die Wendeplatte 1 besteht aus verschiedenen Werkstoffen, die entsprechend der Beanspruchung während der Bearbeitung ausgewählt werden. Diese Werkstoffe können in Schichten aufgebracht sein, wobei die verschiedenen Werkstoffschichten unterschiedliche Dicke haben können. Die Wendeplatte 1 hat einen Grundkörper, der in der beschriebenen Weise an der Spanfläche 3 und an der Freifläche 4 jeweils mindestens eine Beschichtung 10 bzw. 8 aufweist. An der Spanfläche 3 und an der Freifläche 4 können sowohl nach Art als auch nach Anzahl unterschiedliche Beschichtungen vorgesehen sein. Diese Beschichtungen 8, 10 können ihrerseits aus mehreren einzelnen Schichten bestehen. Die Beschichtungen 8, 10 werden vorteilhaft auf den Grundkörper aufgedampft. Hierfür sind das PVD- (physical vapor deposit), das CVD- (chemical vapor deposition) und das Arc-PVD-Verfahren bekannt. Diese Verfahren werden, da sie bekannt sind, nicht näher erläutert. Mit dem PVD-Verfahren können Beschichtungen in einer Dicke zwischen etwa 2 und 5 µm, beim CVD-Verfahren Beschichtungen in einer Dicke von etwa 12 bis 15 µm und beim Arc-PVD-Verfahren Beschichtungen in einer Dicke bis zu etwa 50 µm hergestellt werden. Je nach der gewünschten Dicke der Beschichtungen 8 bzw. 10 wird eines dieser Verfahren vorteilhaft eingesetzt.

Es ist aber auch möglich, die unterschiedlichen Schichten der Beschichtungen 8 und 10 aus Schneidstoff oder Schneidstoffmischungen durch Löten oder galvanotechnisch miteinander zu verbinden. Diese unterschiedlichen Schichten aus Schneidstoff oder Schneidstoffmischungen können durch Flammen, Laserspritzen oder durch eine Plasmaabscheidung vorteilhaft miteinander verbunden werden.

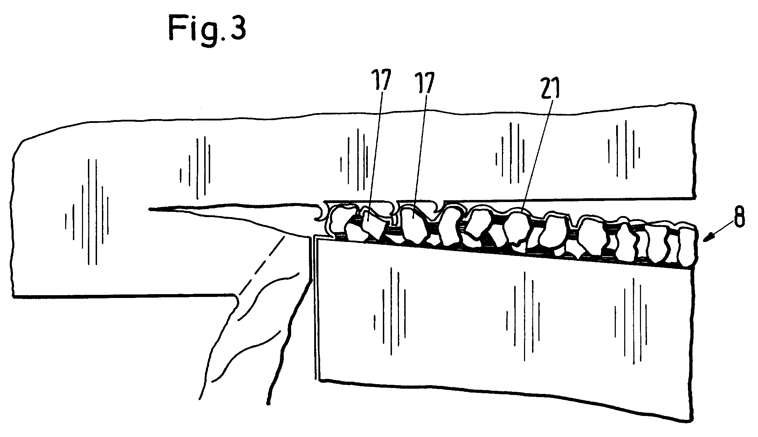

Fig. 3 zeigt eine Ausführungsform, bei der auf der Beschichtung 8 mit den verschleißfesten Elementen 17 eine dünne Beschichtung 21 vorgesehen ist. Sie besteht aus TiC, TiN, Al₂O₃, TiCN und dergleichen und wird nach einem der für die Beschichtung 8 beschriebenen Verfahren aufgebracht.

Die Wendeplatten 1 können in Werkzeugen eingesetzt werden, die zum Drehen, Fräsen, Drehräumen oder Drehfräsen eingesetzt werden. Die einzelnen Schneidplatten 1 liegen am Umfang dieses Werkzeuges entweder auf einem Zylindermantel oder einer beliebigen rotationssymmetrischen Kontur.

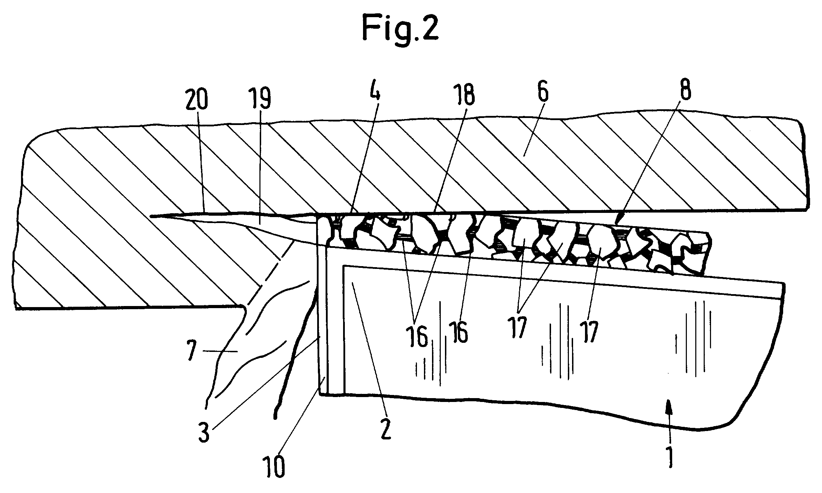

Werden die Werkzeuge mit den Wendeplatten 1 als Drehwerkzeuge eingesetzt, können die Freiflächen 4 bzw. ihre Freiflächenabschnitte 13 am Umfang des Werkzeuges ein Polygon bilden. Der Freiflächenabschnitt 13 kann außer durch das beschriebene Schleifen auch mittels Laser oder sonstiger Abrichtverfahren bearbeitet werden. Auch ein Schärfen dieses Abschnittes 13 ist möglich. Zur Herstellung des Freiflächenbereiches 13 durch Abrichten oder Schärfen können alle bekannten Verfahren der Schleiftechnologie eingesetzt werden, um bewußt Schichtbestandteile in der Freifläche 4 zu entfernen. Besteht die Beschichtung 8 an der Freifläche 4 in der beschriebenen Weise aus den verschleißfesten Elemente 17, die in den elastischen Binder 16 eingebettet sind, entsteht eine Vielzahl von geometrisch unbestimmten Schneiden. Sie üben auch bei Schnittgeschwindigkeiten entsprechend einer Fräsbearbeitung einen Glättungseffekt auf der bearbeiteten Werkstückoberfläche 18 aus. Wie sich aus den Fig. 1 und 2 ergibt, wird durch die Wendeplatte 1 mit dem Schneidkeil 2 aus dem Werkstück 6 der Span 7 abgetrennt. Bei dieser Spanbildung entsteht am Werkstück 6 ein voreilender Riß 19, der eine rauhe Bruchfläche 20 bildet. Diese rauhe Bruchfläche 20 wird durch den nachfolgenden Freiflächenabschnitt 13 mit seiner Vielzahl von geometrisch unbestimmten Schneiden geglättet bzw. poliert bzw. geschliffen. Darum ist nach dem Schruppvorgang eine Schlichtbearbeitung des Werkstückes 6 nicht mehr notwendig. An der Schneidkante 12 entsteht ein gegen das Werkstück 6 gerichteter Druck, so daß das Werkstück in diesem Bereich nach innen belastet wird. Da die verschleißfesten Elemente 17 in den elastischen Binder 16 eingebettet sind, kann der jeweils belastete Werkstückbereich hinter der Schneidkante 12 bzw. hinter den jeweiligen verschleißfesten Elementen 17 zurückfedern. Die nachfolgenden verschleißfesten Elemente 17 können dann diesen zurückgefederten Werkstückbereich in der beschriebenen Weise glätten und gegebenenfalls sogar abschleifen. Ein mit den beschriebenen Wendeplatten 1 bestücktes Werkzeug kann das Werkstück 6 in einem Arbeitsgang sehr genau und mit geringen Kosten bearbeiten. Da an den Wendeplatten 1 in der beschriebenen Weise durch den Abrichtvorgang eine Verschleißvorwegnahme erzielt wird, kann in einfacher Weise die hohe Bearbeitungsgenauigkeit erzielt werden. Bei der Verschleißvorwegnahme durch das Abrichten der Freifläche im Bereich 13 wird die bekannte Standzeitcharakteristik der Wendeplatte ausgenutzt. Nach 50 % des radialen Verschleißes der Wendeplatte 1 hat sie erst 30 % ihrer Standzeit erreicht. Durch die wesentlich geringeren Kosten der Schneidplatte 1 kann der Verzicht auf bis zu 30 % der Standzeit überkompensiert werden. Der Radius der Schneidkante 12 kann sehr klein gehalten werden, wodurch im Einsatz der Wendeplatte 1 auch eine entsprechend geringe Abdrängbelastung der Schneidplatte 1 erreicht wird. Durch den Abrichtvorgang läßt sich eine extrem scharfkantige Schneidkante 12 erzielen, wodurch die bearbeitete Werkstückoberfläche 18 eine hohe Genauigkeit aufweist. Durch den schleifenden Oberflächenkontakt zwischen dem Bereich 13 der Freifläche 4 der Wendeplatte 1 und der Werkstückoberfläche 18 werden zudem die Rauheitsspitzen geglättet, wodurch die Bearbeitungsgenauigkeit noch erhöht wird.

Darüber hinaus kann die Bearbeitungsgenauigkeit zusätzlich noch dadurch erhöht werden, daß die Maschinensteifigkeit mechanisch oder durch steuerungstechnische Korrekturen erhöht wird. Auch eine Erhöhung der Schnittgeschwindigkeit beim Zerspanungsprozeß führt zu einer erhöhten Bearbeitungsgenauigkeit. Hierzu trägt auch die Vermeidung einer Getriebeentlastung durch mehrere im Eingriff befindliche Wendeplatten 1 bei. Darüber hinaus kann die Positionsgenauigkeit der Wendeplatten zur Werkzeugmitte erhöht werden. Die Wendeplatten 1 werden heute mit einer Genauigkeit von ± 5 µm einzeln oder in Reihe geschliffen. Die Plattensitze des Werkzeuges werden durch Abstimmelemente auf eine Genauigkeit von bis zu ± 10 µm abgestimmt. Durch eine sinnvolle Kombination dieser Maßnahmen, angepaßt auf den jeweiligen Einsatzfall (Drehen, Fräsen, Drehfräsen, Reiben, Räumen, Wirbeln und dergleichen), kann der spanabhebende Prozeß hinsichtlich Genauigkeit und Wirtschaftlichkeit im Vergleich zu den bekannten Werkzeugen wesentlich verbessert werden.

Die einfachste und kostengünstigste Lösung besteht darin, die Wendeplatte 1 so auszubilden, daß der Freiwinkel am Schneidteil 2 zwischen 0 und 3° liegt, vorzugsweise bei 0°. Dieser Freiwinkel wird durch Abrichten der Freifläche 4 im Bereich 13 erzielt. Allein durch diese Maßnahme wird im Vergleich zu herkömmlichen Wende- bzw. Schneidplatten 1 eine wesentlich verbesserte Genauigkeit und Wirtschaftlichkeit erzielt. Zusätzlich können die zuvor beschriebenen weiteren Maßnahmen sinnvoll miteinander kombiniert werden, wodurch die Bearbeitungsgenauigkeit und Wirtschaftlichkeit noch weiter verbessert werden.

Die verschleißfesten Elemente 17, die vorzugsweise CBN-Monokristalle sind, sind lediglich an denjenigen Wirkflächen der Wendeplatte 1 vorgesehen, die geringe Belastungsstöße erfahren, dafür aber eine große Verschleißfestigkeit und eine hohe Warmhärte zeigen müssen. Diese Wirkfläche ist die Freifläche 4. Der Übergang zwischen der stoßbelasteten Spanfläche 3 und der mit den CBN-Kristallen besetzten Fläche 13 ist durch eine Redundanz der die Werkstückoberfläche bestimmenden CBN-Körner geprägt. Diese Beschichtung 8 ist nicht als feinkörnig gesinterte Schneidkante 12 ausgeführt, sondern besteht aus einzelnen Monokristallen, die eine ausreichende Bewegungsmoglichkeit gegeneinander haben. Der Binder 16 ermöglicht eine elastische Einbindung der CBN-Körner 17 und ermöglicht über die Standzeit der Wendeplatte 1 eine ausreichende Befestigung der CBN-Körner 17. Bei Belastungsstößen können die Schneidkanten der jeweiligen CBN-Körner 17 in der beschriebenen Weise ausweichen. Nach dem Abrichtvorgang bildet die elastische Matrix durch Verschleiß den geringen Traganteil des Bereiches 13 der Freifläche 4.

## Patentansprüche

1. Schneidplatte, insbesondere Wendeplatte, für ein spanabhebendes Werkzeug, mit einem Schneidkeil, der durch eine Spanfläche und eine Freifläche gebildet ist
dadurch gekennzeichnet, daß am Schneidkeil (2) ein Freiwinkel zwischen 0° und etwa 3° vorgesehen ist.

2. Schneidplatte nach Anspruch 1,
dadurch gekennzeichnet, daß der Freiwinkel am Schneidkeil (2) 0° beträgt.

3. Schneidplatte nach Anspruch 1 oder 2,
dadurch gekennzeichnet, daß die Spanfläche (3) und die Freifläche (4) aus unterschiedlichen Werkstoffen bestehen und vorteilhaft einander in einer Schneidkante (12) schneiden.

4. Schneidplatte nach Anspruch 3,
dadurch gekennzeichnet, daß die Schneidkante (12) durch eine Vielzahl von geometrisch bestimmten Schneidelementen (17) gebildet ist, die neben- und hintereinander vorgesehen sind.

5. Schneidplatte nach Anspruch 3,
dadurch gekennzeichnet, daß die Schneidkante (12) durch eine Vielzahl von geometrisch unbestimmten Schneidelementen (17) gebildet ist, die neben- und hintereinander vorgesehen sind.

6. Schneidplatte nach Anspruch 4 oder 5,
dadurch gekennzeichnet, daß die Schneidelemente (17) in der Span- und/oder in der Freifläche (3, 4) vorgesehen sind.

7. Schneidplatte nach einem der Ansprüche 1 bis 6,
dadurch gekennzeichnet, daß die Freifläche (4) und vorzugsweise auch die Spanfläche (3) durch die Oberseite einer Beschichtung (8 bzw. 10) eines Grundkörpers der Schneidplatte (1) gebildet sind.

8. Schneidplatte nach Anspruch 7,
dadurch gekennzeichnet, daß die Beschichtung (8) der Freifläche (4) dicker ist als die Beschichtung (10) der Spanfläche (3), vorzugsweise hat die Beschichtung (8) eine Dicke von mehr als etwa 0,02 mm.

9. Schneidplatte nach Anspruch 7 oder 8,
dadurch gekennzeichnet, daß die Beschichtungen (8, 10) unterschiedliche Körnungen aufweisen.

10. Schneidplatte nach einem der Ansprüche 1 bis 9,
dadurch gekennzeichnet, daß die Freifläche (4) einen an die Schneidkante (12) anschließenden ebenen oder gekrümmten Abschnitt (13) aufweist.

11. Schneidplatte nach einem der Ansprüche 7 bis 10,
dadurch gekennzeichnet, daß die Beschichtungen (8, 10) der Freifläche (4) und der Spanfläche (3) nach Art und Anzahl unterschiedliche Schichten aufweisen.

12. Schneidplatte nach einem der Ansprüche 7 bis 11,
dadurch gekennzeichnet, daß die Beschichtung (8) der Freifläche (4) einen größeren Massenanteil aufweist als die Beschichtung (10) der Spanfläche (3).

13. Schneidplatte nach einem der Ansprüche 1 bis 12,
dadurch gekennzeichnet, daß die Spanfläche (3) aus stoßunempfindlichem Werkstoff besteht, und daß vorteilhaft die Freifläche (4) aus einem Schneidstoff oder einer Schneidstoffkomposition mit höherer Abriebfestigkeit und/oder größerer Härte als die Spanfläche (3) besteht.

14. Schneidplatte nach einem der Ansprüche 1 bis 13,
dadurch gekennzeichnet, daß die Freifläche (4) eine Vielzahl von geometrisch bestimmten und/oder unbestimmten Schneidelementen (17) aufweist, die vorzugsweise CBN-Monokristalle sind, und daß vorzugsweise die Schneidelemente (17) aus Al₂O₃ (Korund), Siliziumnitrid, Saphir, natürlichen oder künstlichen Diamantkristallen oder CBN-Monokristallen bestehen.

15. Schneidplatte nach einem der Ansprüche 1 bis 14,
dadurch gekennzeichnet, daß auf die Beschichtung (8) der Freifläche (4) eine weitere Beschichtung (21) aufgetragen ist, die vorteilhaft dünner ist als die Beschichtung (8) der Freifläche (4).

16. Schneidplatte nach Anspruch 15,
dadurch gekennzeichnet, daß die weitere Beschichtung (21) aus TiC, TiN, Al₂O₃, TiCN und dergleichen besteht.

17. Schneidplatte nach einem der Ansprüche 1 bis 16,
dadurch gekennzeichnet, daß der Spanwinkel (11) im Bereich von etwa -10° bis etwa +15° und vorzugsweise der Keilwinkel (5) des Schneidkeils (2) zwischen etwa 70° und etwa 95° liegen.

18. Verfahren zur Herstellung einer Schneidplatte, insbesondere einer Wendeplatte, nach einem der Ansprüche 1 bis 17, bei dem an der Schneidplatte mindestens eine Spanfläche und mindestens eine Freifläche vorgesehen werden,
dadurch gekennzeichnet, daß auf die Schneidplatte (1) zur Bildung der Spanfläche (3) und der Freifläche (4) jeweils mindestens eine Beschichtung (10; 8, 21) so aufgebracht wird, daß der Freiwinkel der Freifläche (4) zwischen 0° und etwa 3° liegt.

19. Verfahren nach Anspruch 18,
dadurch gekennzeichnet, daß für den Freiwinkel 0° gewählt wird.

20. Verfahren nach Anspruch 18 oder 19,
dadurch gekennzeichnet, daß die jeweilige Beschichtung (8, 21; 10) auf einen Grundkörper der Schneidplatte (1), vorzugsweise mit einem PVD-, CVD- oder einem Arc-PVD-Verfahren, aufgedampft wird.

21. Verfahren nach einem der Ansprüche 18 bis 20,
dadurch gekennzeichnet, daß zur Herstellung der jeweiligen Beschichtung (8, 21; 10) mehrere Schichten aufgebracht werden.

22. Verfahren nach Anspruch 21,
dadurch gekennzeichnet, daß die Schichten durch Löten oder galvanotechnisch oder durch Sintern miteinander verbunden werden.

23. Verfahren nach Anspruch 21,
dadurch gekennzeichnet, daß die Schichten durch Flamm- oder Laserspritzen miteinander verbunden werden.

24. Verfahren nach Anspruch 21,
dadurch gekennzeichnet, daß die Schichten durch Plasmaabscheidung miteinander verbunden werden.

25. Verfahren nach einem der Ansprüche 18 bis 24,
dadurch gekennzeichnet, daß die Beschichtungen (8, 21; 10) mit unterschiedlichen Körnungen und/oder mit unterschiedlichen Abscheidezeiten hergestellt werden.

26. Verfahren nach einem der Ansprüche 18 bis 25,
dadurch gekennzeichnet, daß als Beschichtung (8) für die Freifläche (4) monokristalline CBN-Körner (17) oder ähnliche Hartstoffpartikel, wie Al₂O₃ (Korund), Siliziumnitrid, natürliche oder künstliche Diamantkristalle und dergleichen, verwendet werden, die durch ein Bindemittel (16), wie Nickel, zusammengehalten werden, und daß vorteilhaft ein Teil (13) der Beschichtung (8) abgerichtet wird, wobei Schichtbestandteile entfernt werden.

27. Verfahren nach einem der Ansprüche 18 bis 26,
dadurch gekennzeichnet, daß auf die Beschichtung (8) der Freifläche (4) eine weitere Beschichtung (21) aufgebracht wird, für die vorzugsweise TiC, TiN, Al₂O₃, TiCN und dergleichen verwendet wird.

28. Verfahren nach einem der Ansprüche 18 bis 27,
dadurch gekennzeichnet, daß der Schneidkeil (2) als Wafer durch Sintern aus unterschiedlichen Schneidstoffen oder Schneidstoffmischungen hergestellt wird.

29. Werkzeug, das mit Schneidplatten nach einem der Ansprüche 1 bis 17 versehen ist,
dadurch gekennzeichnet, daß die Schneidkanten (12) der Schneidplatten (1) am Umfang des Werkzeuges auf einem gedachten Zylindermantel oder einer beliebigen rotationssymmetrischen Kontur liegen.

30. Werkzeug nach Anspruch 29,
dadurch gekennzeichnet, daß bei Einsatz als Drehwerkzeug die Freiflächen (4) am Umfang des Werkzeuges ein Polygon bilden.

31. Verfahren zum Zerspanen eines Werkstückes unter Verwendung einer Schneidplatte nach einem der Ansprüche 1 bis 17 oder unter Einsatz eines Werkzeuges nach Anspruch 29 oder 30, bei dem mit der Schneidplatte Späne vom Werkstück abgehoben werden,
dadurch gekennzeichnet, daß mit der Freifläche (4) die durch den abgehobenen Span (7) freigelegte Bruchfläche (20) des Werkstückes (6) geglättet wird.

32. Verfahren nach Anspruch 31,
dadurch gekennzeichnet, daß die Bruchfläche (20) mit dem abgerichteten Teil der Freifläche (4) oder durch eine Vielzahl von geometrisch unbestimmten Schneiden der Schneidelemente (17) geglättet wird.

33. Verfahren nach Anspruch 31 oder 32,
dadurch gekennzeichnet, daß die Glättung bei einer Schnittgeschwindigkeit entsprechend einer Fräsbearbeitung vorgenommen wird, und daß vorteilhaft die Schnittgeschwindigkeit beim Zerspanen des Werkstückes (6) im Bereich zwischen Dreh-, Fräs- und Schleifgeschwindigkeiten liegt.

34. Verfahren nach einem der Ansprüche 31 bis 33,
dadurch gekennzeichnet, daß je nach Bearbeitungsaufgabe bei der Grob- oder Feinzerspanung Schnittgeschwindigkeit und Vorschub, gebildet durch eine Relativbewegung zwischen Werkstück (6) und Werkzeug, aufeinander abgestimmt werden.
